# EUROPÄISCHE PATENTANMELDUNG

(11) **EP 1 724 485 A2**
(43) Veröffentlichungstag der Anmeldung: **22.11.2006**
(21) Anmeldenummer: 06113536.4
(22) Anmeldetag: 04.05.2006
(51) Int. Cl.: F16D 25/00

(54) **Kupplung**

(30) Priorität: 19.05.2005 EP 05008661
(71) Anmelder: Hasic, Enver, 9601 Arnoldstein (AT)
(72) Erfinder: Hasic, Enver, 9601 Arnoldstein (AT)
(74) Vertreter: Kontrus, Gerhard

(57) **Zusammenfassung**

Beschrieben ist eine Kupplung zur trennbaren Verbindung einer Antriebswelle (30) mit einer Abtriebswelle (2/2), wobei die Kupplung folgende Eigenschaften umfasst:
- mindestens eine Hydraulikpumpe (4, 14), deren Gehäuse entweder mit dem antriebseitigen oder mit dem abtriebseitigen Kupplungsteil fix verbunden ist, und zumindest ein Rotor der Hydraulikpumpe (4, 14) mit dem anderen Teil der Kupplung über ein Zahnrad verbunden ist,
- mindestens ein Hydraulikventil, das gleichzeitig sowohl den Zulauf als auch den Rücklauf der Hydraulikpumpe (4, 14) reguliert.

Hydraulikventil und Hydraulikpumpe (4, 14) sind so miteinander über Hydraulikleitungen (6) verbunden, dass bei Schließen des Hydraulikventils (7, 8) der Rotor der Hydraulikpumpe (4, 14) gestoppt wird und somit die Kupplung geschlossen ist.

## Beschreibung

Die Erfindung betrifft eine Kupplung zur trennbaren Verbindung einer Antriebswelle mit einer Abtriebswelle. Die Antriebswelle kann zum Beispiel die Kurbelwelle eines Motors sein während die Abriebswelle eine Well sein kann, die mit einer Getriebeeinheit verbunden ist.

Üblicherweise wird ein Motor mit einer Getriebeeinheit mittels einer Trockenkupplung verbunden. Solche Trockenkupplungen haben jedoch den Nachteil, dass die Federkraft mit der die beiden Kupplungsscheiben aneinander gedrückt werden beim Betätigen überwunden werden muss. Außerdem kommt es beim Einkuppeln, insbesondere wenn dies langsam geschehen soll ("Schleifen der Kupplung"), zu erheblichem Abrieb, was nicht nur zu erhöhtem Verschleiß der Kupplungsscheibe, sondern auch zu Staubbelastung der Umwelt durch Abrieb. Dies zeigt sich besonders, wenn ein hohes Drehmoment übertragen werden soll.

Aufgabe der Erfindung ist es eine Kupplung zu Verfügung zu stellen, die weniger Verschleiß zeigt.

Die Aufgabe wird erfindungsgemäß gelöst indem eine Kupplung zur trennbaren Verbindung einer Antriebswelle mit einer Abtriebswelle vorgeschlagen wird, wobei die Kupplung folgende Eigenschaften umfasst:

- mindestens eine Hydraulikpumpe, deren Gehäuse entweder mit dem antriebseitigen oder mit dem abtriebseitigen Kupplungsteil fix verbunden ist, und zumindest ein Rotor der Hydraulikpumpe mit dem anderen Teil der Kupplung über ein Zahnrad verbunden ist,

- mindestens ein Hydraulikventil, das gleichzeitig sowohl den Zulauf als auch den Rücklauf der Hydraulikpumpe reguliert.

Hydraulikventil und Hydraulikpumpe sind so miteinander über Hydraulikleitungen verbunden, dass bei Schließen des Hydraulikventils der Rotor der Hydraulikpumpe gestoppt wird und somit die Kupplung geschlossen ist.

Zulauf und Rücklauf der Hydraulikpumpe bzw. der Hydraulikpumpen sind miteinander über Hydraulikkanäle verbunden.

Als Hydraulikpumpe kann hier eine außen verzahnte Zahnradpumpe verwendet werden, wobei jedoch jede andere rotierende Verdrängerpumpe verwendet werden kann. Geeignet sind z.B. auch innen verzahnte Zahnradpumpen, oder Kreiskolbenpumpen. Die Dichtigkeit der Pumpe bestimmt den Schlupf der Kupplung.

In einem Kupplungsteil ist eine im Kreis geführte Hydraulikleitung eingearbeitet. Der Durchfluss dieser Hydraulikleitung wird von einem oder mehreren Hydraulikventilen geschaltet. Weiters befindet sich in dieser Hydraulikleitung eine oder mehrere Hydraulikpumpen (rotierende Verdrängerpumpen). Wird das (die) Hydraulikventil(e) geschlossen, so stoppt der Fluss der Hydraulikflüssigkeit in der Hydraulikleitung und die Hydraulikpumpe(n) werden gestoppt (d.h. drehen sich nicht mehr). Auf der rotierenden Welle der Pumpe befindet sich ein erstes Zahnrad (Ritzel), das in ein zweites Zahnrad, das mit dem zweiten Kupplungsteil verbunden ist (oder aus diesem herausgearbeitet ist), eingreift. Wenn nun das (die) Hydraulikventil(e) offen ist (sind) kann die Flüssigkeit in der Hydraulikleitung im Kreis strömen. Die Ritzel der Hydraulikpumpen werden dann von dem zweiten Zahnrad des zweiten Kupplungsteils angetrieben und die Hydraulikpumpen fördern so die Hydraulikflüssigkeit im Kreis. Es wird daher kein Drehmoment von einem Kupplungsteil zum anderen übertragen. Wird nun das Fließen der Hydraulikflüssigkeit durch Schließen des (der) Hydraulikventil(e) verhindert, so kann (können) sich die Hydraulikpumpe(n) nicht mehr drehen. Das (die) Ritzel bleiben stehen, und das Drehmoment wird von einem Kupplungsteil zum anderen übertragen.

Es können eine oder mehrere Hydraulikpumpen sowie eine oder mehrere Hydraulikventile gewählt werden. Wenn nur ein Hydraulikventil, jedoch mehrere Hydraulikpumpen gewählt werden so stoppt das Schließen des einen Ventils gleichzeitig das Fördern aller Pumpen.

Das (die) Hydraulikventil(e) können mechanisch, elektrisch, elektromechanisch oder elektronisch gesteuert werden. In einer einfachen Variante erfolgt die Hydraulikventilsteuerung über einen Einrückhebel, der bestimmt ob das (die) Hydraulikventil(e) offen oder geschlossen sind. Durch langsames Schließen kann ein langsames "Einschleifen der Kupplung erfolgen". Die Hydraulikventile können direkt als Magnetventile oder als Pneumatikventile ausgeführt sein.

In einer vorteilhaften Ausführungsform werden mindestens zwei Hydraulikpumpen vorgesehen sind. Dadurch kann, wenn diese Hydraulikpumpen symmetrisch zur Kupplungsachse (Rotationsachse der Antriebswelle) angeordnet sind, die Kraft die von einem Kupplungsteil zum anderen Kupplungsteil übertragen werden soll, symmetrisch zur Kupplungsachse verteilt werden. Je höher die Anforderung an die Kupplung desto mehr Hydraulikpumpen werden gewählt.

Bei einer weiteren Ausführungsform werden mindestens zwei Hydraulikventile vorgesehen. Obwohl bereits ein Ventil genügen würde so ist es aus Gründen der Redundanz und zur besseren Kraftaufnahme oft vorteilhaft mehrere Hydraulikventile einzusetzen.

Vorteilhafterweise sind gleich viel Hydraulikpumpen wie Hydraulikventile vorgesehen.

Die Hydraulikpumpe(n) kann mit dem (den) Hydraulikventil(en) über einen Hydraulikleitung, die in einem der Kupplungsteile eingearbeitet ist, verbunden sein.

Bei einer weitern Ausführungsform ist der Kupplungsteil, in dem die Hydraulikleitung eingearbeitet ist, der antriebseitige Kupplungsteil. Auch kann das Pumpengehäuse bzw. die Pumpengehäuse der Hydraulikpumpe(n) in dem Kupplungsteile eingearbeitet ist, in dem sich die Hydraulikleitung befindet.

Wenn mit der Hydraulikleitung ein Regulator verbunden ist, kann der Druck in der Hydraulikleitung reguliert werden, wodurch Eindringen von Luft in die Hydraulikleitung verhindert werden kann. Außerdem wird der Regulator zum Nachfüllen von Hydraulikflüssigkeit verwendet.

Vorteilhafterweise ist der abtriebseitige Kupplungsteil in einem Hohlraum zwischen einer Schwungscheibe und einer Halterung eingebettete. Dieser Hohlraum kann Getriebeöl enthalten.

In einer weiteren Ausführungsform sind die Kupplungsteile über ein Lager drehbar miteinander verbunden und gegeneinander axial und radial gelagert. Wenn die Hydraulikpumpe im ersten Kupplungsteil enthalten ist so greift kann das Ritzel der Hydraulikpumpe in das Zahnrad des zweiten Kupplungsteils eingreifen. Dieses Zahnrad des zweiten Kupplungsteils ist dann konzentrisch zu dem ersten Kupplungsteil gelagert.

Weitere Einzelheiten der Erfindung sind aus folgender Beschreibung und den zugehörigen Figuren ersichtlich.

Abb. 1 zeigt einen Schnitt durch eine Ausführungsform der erfindungsgemäßen Kupplung entlang der Linie C-C (siehe Abb. 2).

Abb. 2 zeigt einen Schnitt durch eine Ausführungsform der erfindungsgemäßen Kupplung entlang der Linie a-a (siehe Abb. 1).

Abb. 3 zeigt einen Schnitt durch eine Ausführungsform der erfindungsgemäßen Kupplung entlang der Linie b-b (siehe Abb. 1).

Abb. 4 zeigt eine Draufsicht einer Ausführungsform der erfindungsgemäßen Kupplung aus Blickrichtung 1-1 (siehe Abb. 2).

Abb. 5 zeigt eine Draufsicht einer Ausführungsform der erfindungsgemäßen Kupplung aus Blickrichtung 2-2 (siehe Abb. 2).

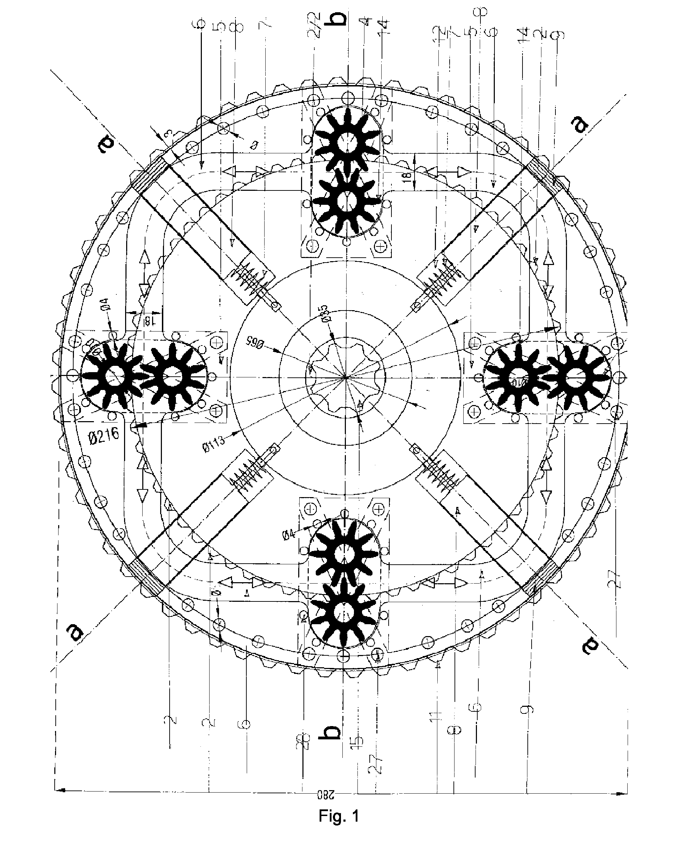

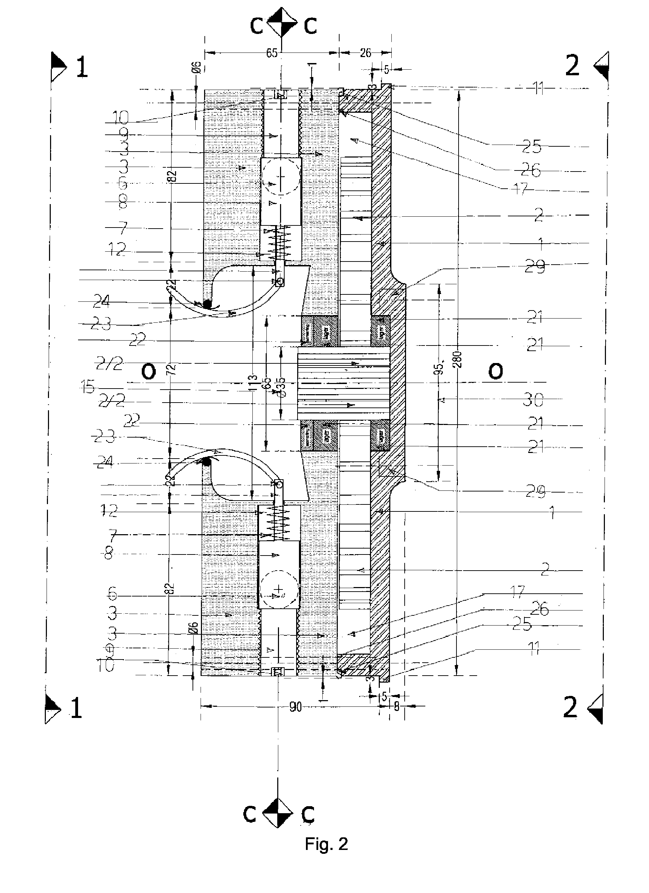

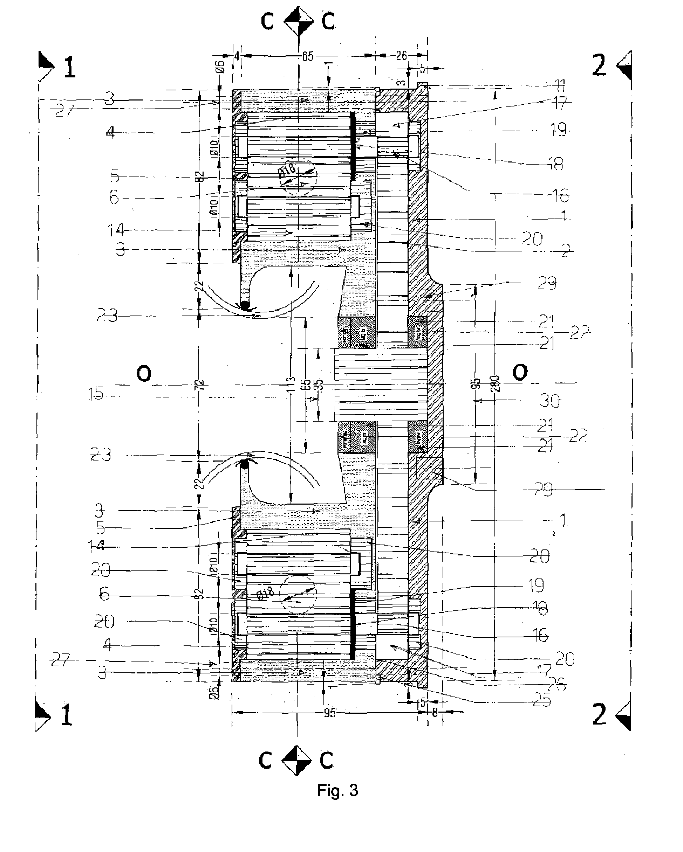

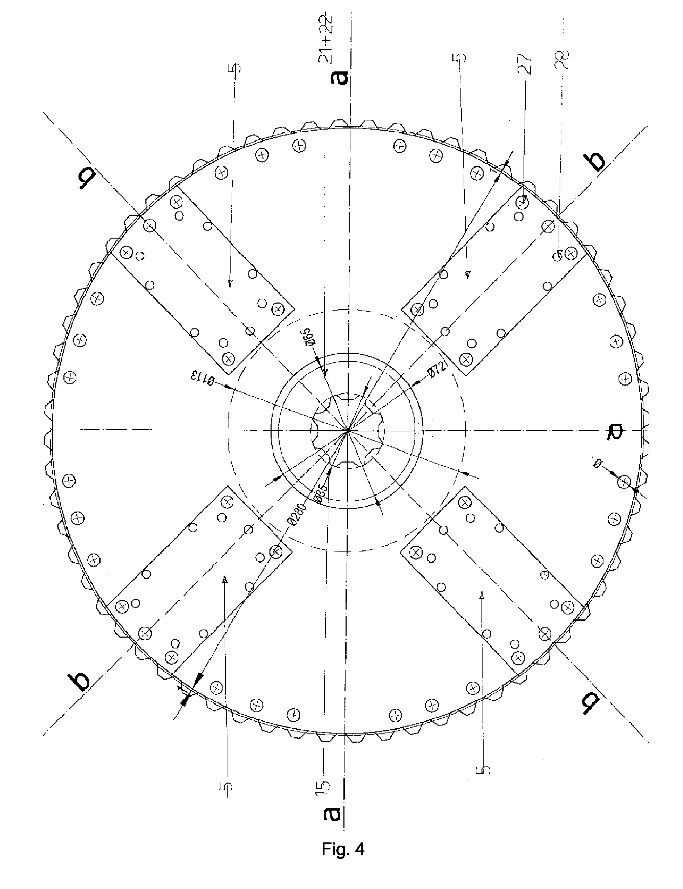

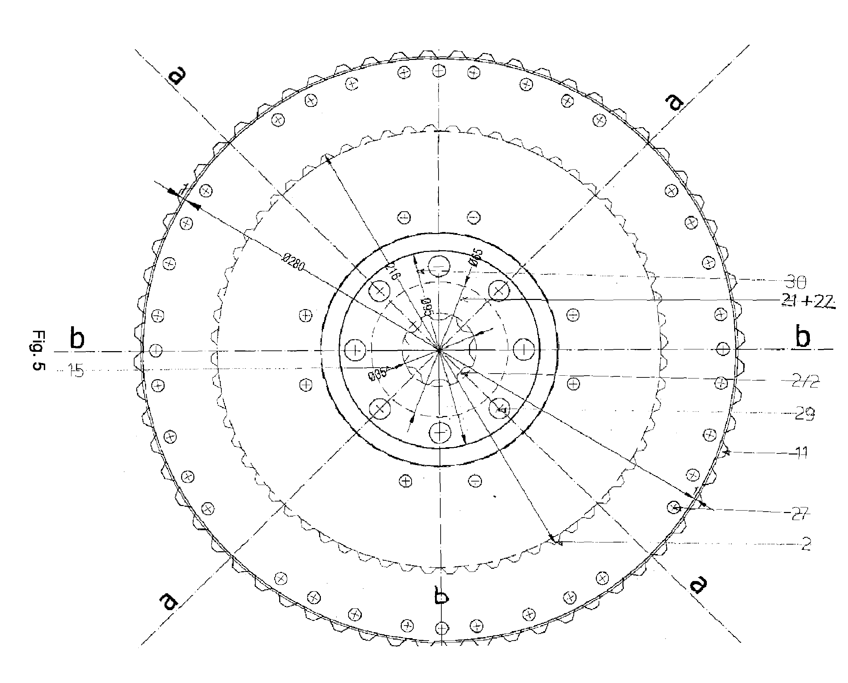

Unter Zusammenschau der Figuren 1-5 wird die hier dargestellte Ausführungsform beschrieben.

Die Kupplung besteht aus einem antriebsseitigen Teil und einem abtriebsseitigen Teil. Der Antriebsseitige Teil der Kupplung umfasst eine Schwungscheibe 1 mit einer Aufnehmung 30 für den Kurbelwellenzapfen, die über 8 Stück M12-Schrauben 29 mit der Kurbelwelle (nicht dargestellt) verbunden ist.

Die Abtriebsscheibe 2, ist innenseitig über eine Keilwellennabe (Nabe mit Innenverzahnung 15) mit der Abtriebswelle oder Getriebeeingangswelle (nicht dargestellt), ausgebildet als Keilwelle, verbunden.

Die Abtriebsscheibe 2 besitzt eine Außenverzahnung, die in die Antriebsritzel 16 (Ritzel 16) der Hydraulikpumpen eingreift. Die Abtriebsscheibe 2 ist gegen die Schwungscheibe 1 bzw. die Halterung 3 über die Lager 21 axial und radial gelagert, und somit mit der Schwungscheibe 1 drehbar verbunden.

Die Halterung 3 für Pumpen und Ventile bildet gleichzeitig eventuell die Gehäuse der Hydraulikpumpen und Ventile. Die Halterung 3 ist fix verbunden mit Schwungrad 1 (verschraubt über 36 Stück M9-Schrauben), und bildet so ihrerseits einen Teil der Schwungmasse der Schwungscheibe 1. Schwungscheibe 1 und Halterung 3 sind gegeneinander mit der innen liegenden Dichtung 26 und der außen liegenden Dichtung 25 gedichtet.

Der Raum 17 zwischen der Schwungscheibe 1 und Halterung dient der Aufnahme der Abtriebsscheibe 2 und als Raum für Getriebeöl zur Schmierung von Abriebsscheibe 2 bzw. Ritzel 16. Einen Austritt des Getriebeöls verhindert die Dichtung 22 (Simmer-Ring). Die Schwungscheibe weist noch eine Außenverzahnung 11 auf, in der z.B. ein Starterritzel eingreifen kann.

In die Halterung 3 sind die Hydraulikölkanäle 6, die Pumpengehäuse der Hydraulikpumpen, die Ventilsitze der Hydraulikventile und die Regulatoren für die Hydraulikflüssigkeit eingebohrt bzw. eingefräst. Die Hydraulikölkanale 6 sind im Kreis angeordnet und verbinden die vier Hydraulikpumpen und die vier Hydraulikventile mit einander. Dabei wechseln Hydraulikpumpen und Hydraulikventile einander ab.

Jede Hydraulikpumpe besitzt Förderzahnrädern 14 und 4, die ineinander eingreifen.

Das erste Pumpenzahnrad 4 der Hydraulikpumpe ist über eine Welle mit Ritzel 16, das in das Zahnrad der Abtriebsscheibe 2 eingreift, verbunden. Die Messingscheibe 18 auf dieser Welle zwischen Ritzel 16 und erstem Förderzahnrad 4 dichtet das Hydrauliköl gegen das Getriebeöl.

Die Achse des ersten Förderzahnrades (Pumpenzahnrades) 14 (gleichzeitig Achse des Ritzels 16) ist einerseits im Pumpendeckel 5 gelagert und anderseits in der Schwungscheibe 1 (Lager 20).

Das Walzenlager 19 befindet sich zwischen Ritzel 16 und erstem Pumpenzahnrad 4 und ist in der Halterung eingepresst.

Jeder Pumpendeckel 5 ist mit neun Stück M6-Schrauben 28 mit der Halterung 3 verschraubt.

Die Achse des zweiten Förderzahnrades 14 ist einerseits in der Halterung 3 (Lager 20) und anderseits im Pumpendeckel 5 gelagert.

Jedes Hydraulikventil besteht aus einer Ventilfeder 7 und einem Ventilkolben 8. Der Zylinder 12 der den Ventilkolben 8 aufnimmt ist direkt in die Halterung 3 gefräst.

Weiters ist jedem Hydraulikventil ein Regulator zugeordnet mit einem Regulator-Verschluss 9 für das Nachfüllen des Hydrauliköls und einer Regulatorschraube 10.

Die Ventilkolben 8 werden über vier Einrückhebel 23, die in Führungsschienen 24 geführt sind, betätigt.

Werden bei Betätigung des Kupplungspedals die Einrückhebel gegen die Ventilkolben 8 geschoben, so öffnen sich die Ventile und die Abtriebscheibe 2 treibt Hydraulikpumpen über die Ritzel 16, da sich die Schwungscheibe 1 und mit ihr die Hydraulikpumpen um die Kupplungsachse dreht.

### Bezugszeichenliste

1 Schwungscheibe

2 Abtriebsscheibe, innenseitig verbunden mit der Abtriebswelle

3 Halterung für Pumpen und Ventile, eventuell Gehäuse der Hydraulikpumpen und Ventile; fix verbunden mit Schwungrad 1 (verschraubt)

4 erstes Pumpenzahnrad der Hydraulikpumpe, über Welle verbunden mit Ritzel 16, das in das Zahnrad der Abtriebsscheibe 2 eingreift

14 zweites Pumpenzahnrad der Hydraulikpumpe, das in das erste Pumpenzahnrad 4 eingreift

5 Pumpendeckel

6 Hydraulikölkanal; verbindet die Hydraulikpumpen miteinander

7 Ventilfeder des Hydraulikventils

8 Kolben des Hydraulikventils

9 Regulator Verschluss für Nachfüllen des Hydrauliköls

10 Schraube für Regulator

11 Außenverzahnung der Schwungscheibe

12 Zylinder für Ventilkolben

13 2/2 Abtriebswelle

15 Innenverzahnung der Abtriebsscheibe 2 für Getriebeeingangswelle

16 Ritzel auf Welle des ersten Pumpenzahnrades 4

17 Raum für Getriebeöl zur Schmierung von Abtriebscheibe 2 bzw. Ritzel 16

18 Messingscheibe zum Dichten von Hydrauliköl gegen Getriebeöl

19 Walzenlager zwischen Ritzel 16 und erstem Pumpenzahnrad 4

20 Walzenlager für zweites Pumpenzahnrad 14

21 Walzenlager für Abtriebsscheibe 2

22 Simmerring Dichtung für Getriebeöl

23 Einrückhebel zur Betätigung der Hydraulikventile

24 Führungsschiene für den Einrückhebel 23

25 Dichtung außen (aus Kupfer und Asbest) zwischen Schwungscheibe 1 und Gehäuse 3

26 Dichtung innen (aus Kupfer und Asbest) zwischen Schwungscheibe 1 und Gehäuse 3

27 Schrauben (M9) zur Verbindung von Schwungrad 1 und Gehäuse 3

28 Schrauben (M6) zur Verbindung von Pumpendeckel 5 und Gehäuse 3

29 Schrauben (M12) zur Verbindung von Schwungscheibe 1 mit Kurbelwelle

30 Aufnehmung für Kurbelwellenzapfen

## Patentansprüche

1. Kupplung zur trennbaren Verbindung einer Antriebswelle (30) mit einer Abtriebswelle (2/2) umfassend:
- mindestens eine Hydraulikpumpe (4, 14), deren Gehäuse entweder mit dem antriebseitigen Kupplungsteil (3) oder mit dem abtriebseitigen Kupplungsteil (2) fix verbunden ist, und zumindest ein Rotor (4) der Hydraulikpumpe (4, 14) mit dem andern Teil der Kupplung über ein Zahnrad (16) verbunden ist undmindestens ein Hydraulikventil (7, 8), das gleichzeitig sowohl den Zulauf (6) als auch den Rücklauf (6) der Hydraulikpumpe (4, 14) reguliert,wobei Hydraulikventil (7, 8) und Hydraulikpumpe (4, 14) so miteinander über Hydraulikleitungen (6) verbunden sind, dass bei Schließen des Hydraulikventils (7, 8) der Rotor (4) der Hydraulikpumpe (4, 14) gestoppt wird und somit die Kupplung geschlossen ist.

2. Kupplungseinheit nach Anspruch 1, wobei die Hydraulikventile mechanisch, elektrisch, elektromechanisch oder elektronisch gesteuert werden.

3. Kupplungseinheit nach einem der Ansprüche 1 oder 2, wobei mindestens zwei Hydraulikpumpen (4, 14) vorgesehen sind.

4. Kupplungseinheit nach einem der Anspruch 1 bis 3, wobei gleich viel Hydraulikpumpen (4, 14) wie Hydraulikventile (7, 8) vorgesehen sind.

5. Kupplungseinheit nach einem der Anspruch 1 bis 4, wobei die die Hydraulikpumpe(n) (4, 14) mit dem (den) Hydraulikventile(n) (7, 8) über einen Hydraulikleitung (6), die in einem der Kupplungsteile (3) eingearbeitet ist, verbunden sind.

6. Kupplungseinheit nach Anspruch 5, wobei der Kupplungsteil (3), in dem die Hydraulikleitung (6) eingearbeitet ist, Element des antriebseitigen Kupplungsteils (1, 3) ist.

7. Kupplungseinheit nach einem der Ansprüche 5 bis 6, wobei die Pumpengehäuse jeder Hydraulikpumpe (4, 14) in dem Kupplungsteile (3) eingearbeitet ist, in dem sich die Hydraulikleitung (6) befindet.

8. Kupplungseinheit nach einem der Ansprüche 1 bis 7, wobei mit der Hydraulikleitung ein Regulator (9) verbunden ist.

9. Kupplungseinheit nach einem der Ansprüche 1 bis 8, wobei der abtriebseitige Kupplungsteil in einem Hohlraum (17)zwischen einer Schwungscheibe (1) und einer Halterung (3) eingebettete ist.

10. Kupplungseinheit nach einem der Ansprüche 1 bis 9, wobei die Kupplungsteile (1, 2 bzw. 3) über mindestens ein Lager (21) drehbar miteinander verbunden und gegeneinander axial und radial gelagert sind.
